# EUROPEAN PATENT APPLICATION

(11) **EP 4 808 010 A2**
(43) Date of publication of application: **16.09.2026**
(21) Application number: 26164041.1
(22) Date of filing: 11.03.2026
(51) Int. Cl.: H04B 7/06, H01Q 3/26, H01Q 23/00

(54) **DIGITAL BASED CONTROL OF RF SIGNAL WEIGHTING IN ANTENNA ARRAY**

(30) Priority: 13.03.2025 FI 20255209
(71) Applicant: Nokia Solutions and Networks Oy, 02610 Espoo (FI)
(72) Inventor: HA, Jaegeun, New Providence (US); SAYGINER, Mustafa, Madison (US); HOLYOAK, Michael, Whippany (US); SHAHRAMIAN, Shahriar, Murray Hill (US)
(74) Representative: Nokia EPO representatives

(57) **Abstract**

The present subject matter relates to a method comprising providing an antenna array comprising a plurality of radiators, each radiator being configured to convey a radio frequency signal; and using a pair of digital control signals to selectively activate a weighting of the radio frequency signal associated with the radiator, in accordance with a defined weighting level.

## Description

### TECHNICAL FIELD

Various example embodiments relate to telecommunication systems, and more particularly to digital based control of radio frequency (RF) signal weighting in an antenna array.

### BACKGROUND

In modern wireless communication systems, precise beamforming may be essential for optimizing signal transmission and reception. Effective beam control may rely on dynamically adjusting the weighting of RF signals across an antenna array to enhance directionality and signal strength. However, traditional methods may rely on complex circuitry which can introduce signal loss and latency.

### SUMMARY

Example embodiments provide an apparatus for a wireless communication system, the apparatus comprising: an antenna array comprising a plurality of radiators, each radiator being configured to convey a radio frequency signal; and a control system comprising beamforming elements associated with the radiators and control lines, each control line being configured to connect to multiple beamforming elements; the control system being configured to send digital control signals through a pair of the control lines that connect to a specific beamforming element associated with a specific radiator to selectively activate a weighting of the radio frequency signal corresponding to the specific radiator in accordance with a defined weighting level.

Example embodiments provide a method comprising providing an antenna array comprising a plurality of radiators, each radiator being configured to convey a radio frequency signal; and using a pair of digital control signals to selectively activate a weighting of the radio frequency signal associated with the radiator, in accordance with a defined weighting level.

### BRIEF DESCRIPTION OF THE DRAWINGS

The accompanying figures are included to provide a further understanding of examples, and are incorporated in and constitute part of this specification. In the figures:
FIG. 1 is a block diagram illustrating an example radio access network in accordance with an example of the present subject matter;
FIG. 2 is a diagram illustrating an apparatus according to an example of the present subject matter;
FIG. 3 is a process flowchart illustrating a method for weighting a radio frequency signal according to an example of the present subject matter;
FIG. 4A is a diagram illustrating a control system according to an example of the present subject matter;
FIG. 4B is a diagram illustrating a Radio Frequency Integrated Circuit (RFIC) according to an example of the present subject matter;
FIG. 4C is a diagram illustrating a RFIC according to an example of the present subject matter;
FIG. 5 illustrates a communication device for beam forming in accordance with an example of the present subject matter;
FIG. 6 is a diagram illustrating a beam shifting method according to an example of the present subject matter;
FIG. 7 is a plot of gain patterns of beams formed by an apparatus according to an example of the present subject matter; and
FIG. 8 is a diagram illustrating a beam shifting method according to an example of the present subject matter.

### DETAILED DESCRIPTION

In the following description, for purposes of explanation and not limitation, specific details are set forth such as particular architectures, interfaces, techniques, etc., in order to provide a thorough understanding of the examples. However, it will be apparent to those skilled in the art that the disclosed subject matter may be practiced in other illustrative examples that depart from these specific details. In some instances, detailed descriptions of well-known devices and/or methods are omitted so as not to obscure the description with unnecessary detail.

The present subject matter may provide a flexible and scalable apparatus that may enable precise and efficient beamforming for various wireless communication applications in a wireless communication system, including high-frequency and directional transmission systems. By leveraging dedicated control lines and digital control signals, the present subject matter may eliminate the need for traditional analog RF switches, which may suffer from high insertion loss, and not limited to, at E-band and higher frequencies. Additionally, the present subject matter may support dynamic adjustments, making it adaptable to different network configurations and deployment scenarios.

The wireless communication system comprises nodes such as base stations, wherein each node may serve devices located within the node's geographical area of service. The wireless communication system may support one or more radio access technologies (RATs). A radio access technology of the radio access technologies may, for example, be evolved universal terrestrial radio access (E-UTRA), fifth generation wireless networks (5G) new radio (NR), or a sixth generation wireless networks (6G) based system, but it is not limited to, as a person skilled in the art may apply the present subject matter to other wireless communication systems provided with necessary properties. The device may refer to an equipment that connects to and communicates with the wireless communication system to access services and applications provided by the wireless communication system. The device may, for example, be a user equipment. The device may, for example, comprise any one of: a mobile phone, a smartphone, a tablet, an Internet of things (IoT) device, a navigational device, or a laptop.

An apparatus may be provided. The apparatus may comprise an antenna array. The antenna array comprises a plurality of radiators. The term 'array' may be used to refer to a structured arrangement of the radiators. This structured arrangement may, for example, be provided as a linear array, a two-dimensional grid, or any other arrangement that enables the radio frequency signal weighting according to the present subject matter. The radiator may refer to an individual component configured to receive a radio frequency signal. The radiator may be implemented as a patch antenna, a dipole antenna, or another suitable radiating structure. The radiator may convey the radio frequency signal. Conveying the radio frequency signal may comprise receiving the radio frequency signal and/or transmitting the radio frequency signal. Specifically, the radiator may receive the radio frequency signal as an electromagnetic wave in a receive mode of operation of the apparatus or as an analog radio frequency signal in a transmit mode of operation of the apparatus. The reception may trigger an electrical response in the radiator, such that the received signal is converted into an electrical current in the receive mode or radiated as an electromagnetic wave in the transmit mode. The apparatus may, for example, comprise a node of the wireless communication system.

The apparatus may comprise a control system. The control system comprises beamforming elements associated with the radiators of the antenna array. Each radiator of the antenna array may be associated with a respective beamforming element of the beamforming elements. For example, each radiator of the antenna array may be configured to connect or couple to its associated beamforming element. The beamforming elements may, for example, be arranged in accordance with a structured arrangement that enables each beamforming element to be coupled with a respective radiator of the antenna array. The beamforming element may refer to a circuit or module configured to control a signal parameter of the radio frequency signal to enable beam steering or beam shaping. The signal parameter may, for example, comprise amplitude and/or phase of the radio frequency signal.

The control system comprises control lines, wherein each control line is configured to connect to multiple beamforming elements. A control line refers to a signal pathway within the control system that may be used to transmit digital control signals. Each control line is connected to multiple beamforming elements that in combination with other control lines, may enable activation of specific beamforming elements. The control lines may be arranged so that the control system may be configured to selectively activate each beamforming element or simultaneously activate a group of beamforming elements in accordance with the structured arrangement of the beamforming elements. The control lines may, for example, be provided as intersecting lines at the beamforming elements or as an alternative configuration that enables signal distribution to selectively activate specific beamforming elements.

The control system may be configured to send digital control signals through a pair of the control lines that connect to a specific beamforming element associated with a specific radiator to selectively activate a weighting of the radio frequency signal corresponding to the specific radiator in accordance with a defined weighting level. The digital control signal may refer to a binary or multi-level signal that determines an operational state of the beamforming element, where the operational state may define a specific value of the signal parameter for the beamforming element. For example, the control system may be configured to send a digital control signal through one control line of the pair of control lines and another digital control signal through the second control line of the pair of control lines, both of which are connected to the specific beamforming element.

Activating a weighting of the radio frequency signal comprises activating the specific beamforming element corresponding to the radio frequency signal. Activating a beamforming element may comprise selecting or activating a specific value of the signal parameter, such that the beamforming element applies a weighting to the radio frequency signal according to the selected signal parameter value. The signal parameter value may, for example, correspond to the weighting level that defines how the radio frequency signal is weighted or modified. For example, in the case of the signal parameter being amplitude, activation of the beamforming element may involve selecting a gain level which may be applied by the beamforming element to amplify the radio frequency signal. In the case of the signal parameter being phase, the activation of the beamforming element may involve selecting a specific phase shift, which may be applied by the beamforming element to adjust the phase of the radio frequency signal. If the signal parameter includes both amplitude and phase, the activation of the beamforming element may involve selecting a specific tuple of amplitude and phase shift, where the amplitude and the phase values may be applied to the radio frequency signal by the beamforming element.

Activating a beamforming element may initiate the process by which a radio frequency signal is first enabled at that beamforming element, allowing it to be further weighted according to a defined weighting level which is the value of the signal parameter obtained as a result of the activation. When the control system sends digital control signals to the beamforming element, it may selectively activate the corresponding beamforming element, ensuring that the radio frequency signal passes through the beamforming element and weighted by adjusting its amplitude and/or phase in accordance with the defined weighting level.

In one example, for each radiator of the antenna array, the control system may be configured to send digital control signals through a pair of the control lines that connect to a specific beamforming element associated with the each radiator to selectively activate a weighting of the radio frequency signal corresponding to the each radiator in accordance with a defined weighting level.

The ability to selectively activate individual beamforming elements may allow for fine-grained control over the antenna array, enabling dynamic adjustments in beam patterns and signal weighting. This flexibility may be advantageous for calibrating the antenna array, compensating for hardware variations, or implementing advanced beamforming techniques such as progressive beam steering. Additionally, controlling single beamforming elements may facilitate diagnostics and fault tolerance, ensuring that malfunctioning elements can be isolated without disrupting the entire system.

In one example, each control line may be associated with a set of one or more digital control pins, which serve as interfaces for sending and receiving control signals. The control system may be configured to send a digital control signal through the control line by utilizing a digital control pin as an entry point, where remaining digital control pins along the control line may allow for signal propagation and selective activation of beamforming elements at their respective intersection points.

The pair of the control lines that connect to the specific beamforming element and used to activate the specific beamforming element may be referred to as first pair. According to one example, the control system is configured to: send further digital control signals through a second pair of the control lines that connect to the specific beamforming element to selectively activate a weighting of the radio frequency signal corresponding to the specific radiator in accordance with another defined weighting level such that the weighting levels are combined to produce an accumulative signal weighting. In this example, the second pair of control lines is completely different from the first pair of control lines. The control system may be configured to send a digital control signal through one control line of the second pair and another digital control signal through the second control line of the second pair, both of which are connected to the specific beamforming element. The four digital control signals may be sent by the control system simultaneously through the respective control lines of the first and second pair of control lines. This may enable multiple activation instances of the beamforming elements. This approach may allow for fine-grained control over amplitude and/or phase adjustments.

Multiple simultaneous activation instances of the beamforming element may involve selecting multiple values of the signal parameter, where each activation instance selects one specific value of the signal parameter. The beamforming element may be configured to apply a combined value that results from the combination of the multiple selected values to the radio frequency signal. If the signal parameter is amplitude, the combined value may represent a cumulative gain level, which may be the sum or weighted combination of the selected gain levels. If the signal parameter is phase, the combined value may correspond to a total phase shift, which may be determined by combining multiple incremental phase shifts. If the signal parameter includes both amplitude and phase, the combined value may be a tuple consisting of a combined amplitude and a combined phase shift, where both are obtained as described above.

According to one example, the beamforming elements are power amplifiers, where the control system comprises a beamforming circuitry with one power amplifier per radiator, wherein the control system is configured to send the digital control signals to simultaneously switch and activate a specific gain level of the power amplifier, wherein the weighting level of the radio frequency signal is determined by the gain level of the power amplifier. The weighting level may, for example, be the gain level. The power amplifier may be designed to support multiple simultaneous activation instances, for example, it may be configured to allow for dynamic gain control, possibly at multiple levels.

The beamforming circuit may comprise the beamforming elements arranged in an array configuration, such that each beamforming element is physically associated with a respective radiator of the antenna array. For example, the beamforming circuit may include one port per beamforming element, ensuring that the radio frequency signal processed by the beamforming element is routed through the respective port to the associated radiator.

According to one example, the control system comprises a first decoder and a second decoder, wherein the first decoder is configured to apply a first digital control signal to a first control line of the pair of control lines associated with the specific radiator and the second decoder is configured to simultaneously apply a second digital control signal of the pair of control lines to a second control line of the pair of control lines, for selectively activating the power amplifier corresponding to the radiator. This dual-decoder approach may ensure that beamforming elements are activated in a structured and simultaneous manner.

A decoder in the control system may refer to a circuit or logic module. The decoder may be configured to receive an instruction to apply one or more digital control signals to respective control lines, where the instruction may be provided by a processing unit of the control system or a beam management controller of the control system. The decoder may use the instruction to determine an activation pattern for the beamforming elements or use the instruction as a command to directly apply the corresponding digital control signals (which may be contained in the instruction) to the control lines. The misalignment may, for example, be identified through a reduction in received radio frequency power and/or a deviation detected by an inclinometer or gyroscope, indicating a shift in orientation. The processing unit may be configured to detect the misalignment by at least receiving a notification of the deviation, which may be based on real-time signal strength monitoring or sensor feedback. Upon detecting the misalignment, the processing unit may generate a first instruction for the first decoder and second instruction for the second decoder in order to adjust the beam direction accordingly. These first and second instructions may then be transmitted to the first and second decoders respectively. Upon receiving the respective instruction, each decoder may apply the corresponding digital control signals to the appropriate control lines, activating the appropriate beamforming elements to correct the misalignment and restore optimal signal reception. The apparatus may comprise the processing unit.

In one example, the processing unit may comprise at least one processor (e.g., CPU); and at least one memory storing instructions that, when executed by the at least one processor, cause the processing unit to: detect the misalignment and generate instruction to the control system, the instruction indicating digital control signals to the appropriate control lines e.g., for activating the appropriate beamforming elements to correct the misalignment by the control system. The control system may use the instruction to determine an activation pattern for the beamforming elements or use the instruction as a command to directly apply the corresponding digital control signals (which may be contained in the instruction) to the control lines.

According to one example, the control system is configured to: define a beam of radio frequency signals having a beamforming configuration, wherein the beamforming configuration specifies the number of beamforming elements, their arrangement as a subarray, and the number of weighting levels per beamforming element within the subarray, and form the beam by using for each beamforming element in the subarray: one or more pairs of the control lines, that connect to the beamforming element associated with the radiator, to activate the weighting of the corresponding radio frequency signal in accordance with the corresponding number of weighting levels.

Specifying the number of beamforming elements is equivalent to or implies the specification of the respective number of radiators, as each radiator is associated with a corresponding beamforming element. The beam may be defined by a beamforming configuration. The beamforming configuration may specify the number of beamforming elements and respective radiators required to transmit or receive radio frequency signals in order to form the beam. The beamforming configuration may further indicate the arrangement of these beamforming elements as a subarray, for example, whether they form a square or another predefined structure. Additionally, the beamforming configuration may specify, for each beamforming element of the subarray, the number of weighting levels, meaning the number of activation instances that need to be executed simultaneously for the beamforming element. With this beamforming configuration defined or stored as a reference, the control system may form the beam accordingly by first identifying, for each beamforming element, the distinct pairs of control lines that may be used to selectively activate the beamforming element a number of times equal to the specified number of weighting levels and then activate all beamforming elements of the subarray simultaneously using digital control signals. The apparatus may be configured to form each beam at a time by activating all beamforming elements associated with the beam simultaneously.

For example, forming a beam may comprise activating a respective subarray of the beamforming elements which may be referred to as active subarray. Activating a subarray of the beamforming elements comprises activating each beamforming element of the beamforming elements of the subarray simultaneously. Activating each beamforming element of the subarray may comprise a single activation instance or multiple simultaneous activation instances depending on the number of activation instances associated with the each beamforming element. An activation instance of each beamforming element may refer to selecting or activating a specific value of the signal parameter, such that the each beamforming element applies a weighting to the radio frequency signal according to the selected signal parameter value. Each activation instance may be associated with a respective value of the signal parameter, which may or may not be the same across different activation instances. Activating the subarray of beamforming elements according to multiple activation instances may comprise, for each activation instance, activating all or part of the beamforming elements within the subarray. The beamforming elements that are activated within a given activation instance may be referred to as forming an individual subarray within the subarray. This may mean that if, for each activation instance, all beamforming elements of the subarray are activated, then the individual subarrays may be referred to as completely overlapping with the subarray. This illustrative structure may enable fine-grained control over beamforming.

According to one example, the control system is configured to shift a first beam having a first direction to a second direction by at least: progressively forming beams until achieving a beam having the second direction, wherein each beam has a respective beamforming configuration, wherein the progressive forming is performed to uninterruptedly shift the first beam in space from the first direction to the second direction, ensuring that the beam in the second direction maintains the beamforming configuration of the first beam. The direction of the beam may refer to the spatial orientation of the beam. This beam shifting may, for example, be performed in accordance with an instruction received by the control system from the processing unit in order to shift the beam from the first direction to the second direction.

For example, this approach may enable the shifting of the first beam from the first direction to the second direction through one or more intermediate beams. The beamforming configuration of the first beam remains the same as that of a second beam having the second direction to ensure consistent performance. However, the beamforming configuration of each intermediate beam may or may not match that of the first beam, allowing for flexibility in the transition process. The progressive forming of beams may ensure an uninterrupted spatial shift of the beam from the first direction to the second direction, meaning that at no point in the transition does the beam completely disappear or leave a coverage gap. This may be achieved by dynamically adjusting the activation of beamforming elements, ensuring that each intermediate beam provides a smooth transition, maintaining signal continuity while gradually steering the beam toward the second direction.

According to one example, the plurality of radiators are arranged in a grid structure, wherein the beamforming elements are arranged in accordance with the grid structure, wherein the beam shift is performed such that the subarrays associated with the formed beams follow a trajectory in the grid structure horizontally, vertically, and/or diagonally to achieve the second direction.

In this example, the plurality of radiators within the antenna array may be structured in a grid arrangement, meaning they are organized in a two-dimensional matrix-like layout along horizontal (X-axis) and vertical (Y-axis) dimensions. The beamforming elements are also arranged in alignment with this grid structure to ensure that each radiator has a corresponding beamforming element for signal control. A beam is formed by activating a subset of beamforming elements provided as a subarray. The subarray consists of a specific number of beamforming elements that contribute to the beamforming process, and their configuration determines the shape, width, and direction of the beam. The beam shift refers to the progressive movement of the beam direction across the grid structure to steer the transmission from the first direction to the second direction. This shifting process is achieved by dynamically reconfiguring the active subarrays by selectively activating new beamforming elements while deactivating others, ensuring a continuous transition of the beam without abrupt interruptions. The subarrays associated with the formed beams follow a trajectory within the grid structure, meaning that the beam moves smoothly across the grid according to a defined path. The beam trajectory may be horizontal, vertical, and/or diagonal, depending on the first and target beam directions. A horizontal shift moves the beam left or right across the grid (X-axis), while a vertical shift moves it up or down (Y-axis). A diagonal shift simultaneously moves the beam in both horizontal and vertical directions. The trajectory may ensure that the beam progressively transitions from its initial direction (first beam) to its target direction (second beam) by activating the necessary beamforming elements along the trajectory.

In this approach, the grid structure may provide a systematic framework for organizing radiators and beamforming elements, while the beam shift mechanism allows the beam to follow a controlled trajectory across the grid. By dynamically adjusting the subarrays, the present subject matter may achieve precise beam steering, enabling real-time directional control in high-frequency wireless communication systems such as massive Multiple Input Multiple Output (MIMO) and millimeter Wave (mmWave) backhaul links.

According to one example, the beam shift is performed such that a drop in power between adjacent beams is smaller than a threshold. This may mean that as the beam progressively transitions from the first direction to the second direction, the control system may ensure that the power variation between consecutive beam positions remains within an acceptable range. By enforcing a power drop threshold, the present subject matter may prevent excessive beamforming gaps, minimize signal fluctuations, and enhance overall transmission efficiency.

According to one example, the beam is formed such that its power remains within predefined power constraints.

This example may refer to the process of generating a beam while ensuring that its transmitted power remains within predefined power constraints. These predefined power constraints may be established based on factors such as regulatory compliance, system efficiency, and link performance requirements. The power constraints may, for example, comprise the above-the-horizon (ATH) Equivalent Isotropically Radiated Power (EIRP) constraints e.g., based on World Radiocommunication Conference (WRC)-2023. The power constraints may, for example, mandate that the total radiated power of the antenna array when transmitting the beam does not exceed a specified power limit. Additionally, the power constraints may specify that the emitted power of the antenna array in certain directions, when transmitting the beam, remains within defined thresholds.

According to one example, the control system is configured to perform the beam shift in accordance with a predefined algorithm. For example, upon detecting the misalignment or a need to perform the beam shift, the processing unit may provide an instruction to the control system, the instruction indicating the algorithm.

The control system is designed to execute the beam shift following the predefined algorithm, ensuring a structured and efficient transition of the beam from one direction to another. This algorithm may govern how the beam is progressively adjusted to determine the optimal path for beam realignment. It may incorporate stepwise beam transitions, where the beam is shifted through intermediate positions, or adaptive adjustments. By following a predefined method for beam shifting, the control system may ensure consistent performance. The algorithm may be referred to as, self-align algorithm enabling a self-align control of the beamforming, because it may enable the apparatus to automatically compensate for misalignment by adjusting a beam direction and signal weighting in real time.

According to one example, the second direction is a target direction, and the first direction corresponds to a misalignment with respect to the target direction.

The second direction represents the target direction, which may be the intended alignment for optimal signal transmission or reception, while the first direction corresponds to a misalignment relative to this target. Misalignment can occur due to environmental factors, mechanical shifts, or dynamic network conditions, leading to signal degradation or reduced link efficiency. To correct this, the control system may realign the beam from the first direction to the second direction.

The misalignment between the first direction and the target (second) direction may be measured and detected using at least one of: sensor-based estimation or real-time signal analysis. An inclinometer, and/or gyroscope may provide a rough estimation of the beam misalignment by detecting physical movements, angular shifts, or platform vibrations that may cause the beam misalignment. Optionally, the control system may further use signal quality metrics, such as received signal strength (RSSI), signal-to-noise ratio (SNR), or link quality indicators, to refine the determined beam misalignment. Upon detecting the beam misalignment, the control system may initiate beam shifting according to the predefined algorithm, ensuring stable and efficient backhaul communication.

According to one example, the radio frequency signal is encoded for transmission within a frequency band, wherein the frequency band comprises a millimeter-wave frequency band. For example, the radio frequency signal is communicated over a backhaul radio link. The apparatus may be configured to transmit the radio frequency signal, after being weighted, over the backhaul radio link or receive the radio frequency signal over the backhaul radio link and then perform the weighting of the radio frequency signal.

The radio frequency signal may be encoded for transmission within a specific frequency band, ensuring that the signal is modulated and structured for efficient wireless communication. The frequency band includes the millimeter-wave frequency band, which may refer to frequencies, and not limited to, between 30 GHz and 300 GHz and may be characterized by high data capacity and short wavelength. Encoding within a defined frequency band may ensure that the transmitted signal is optimized for spectral efficiency. The encoded radio frequency signal is then communicated over a backhaul radio link, which may be a high-capacity, long-range wireless connection used to transport data between base stations, network nodes, or core infrastructure in the wireless communication system. This approach may enable high data throughput with mmWave bands supporting multi-gigabit speeds.

According to one example, the apparatus further comprises a dielectric lens configured to focus beams provided to or by the antenna array. For example, the apparatus may comprise an antenna system, wherein the antenna system comprises the antenna array and the dielectric lens. The antenna array may be referred to as antenna array feeder that feeds the dielectric lens for steering the beam.

The apparatus includes the dielectric lens, which is designed to focus beams either transmitted by or received by the antenna system, enhancing signal directionality and efficiency. This dielectric lens may operate by refraction, bending electromagnetic waves to converge (focus) or diverge (spread) the beam as needed, optimizing the gain, beamwidth, and coverage of the antenna system. This may particularly be beneficial for mmWave communication, where high-frequency signals experience high free-space path loss, and precise beam control may be used for maintaining strong wireless backhaul links.

In one example, the apparatus may be provided as a backhaul system or communication device, where the weighted radio frequency signal(s) is transmitted by the apparatus to establish a high-gain, directional wireless link to a control network via a backhaul interface.

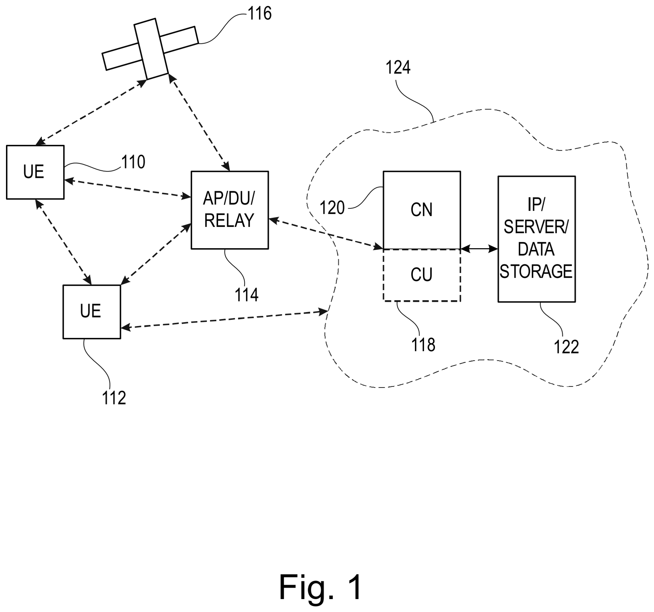

**FIG. 1** is a block diagram illustrating an example radio access network in accordance with an example of the present subject matter. FIG. 1 illustrates examples of simplified system architectures only showing some elements and functional entities, all being logical units, whose implementation may differ from what is shown. The connections illustrated in FIG.1 are logical connections; the actual physical connections may be different. It is apparent to a person skilled in the art that the system typically comprises also other functions and structures than those illustrated in FIG.1.

The embodiments are not, however, restricted to the system given as an example but a person skilled in the art may apply the solution to other communication systems provided with necessary properties.

The example radio access network illustrated in FIG.1 includes devices 110 and 112. The devices 110 and 112 may, for example, be user devices. The devices 110 and 112 are configured to be in a wireless connection on one or more communication channels with a node 114. The node 114 is further connected to a core network 120. In one example, the node 114 may be an access node (such as (e/g)NodeB) 114 providing or serving devices in a cell. In one example, the node 114 may be a non-3GPP access node. The physical link from a device to a (e/g)NodeB is called uplink or reverse link and the physical link from the (e/g)NodeB to the device is called downlink or forward link. It should be appreciated that (e/g)NodeBs or their functionalities may be implemented by using any node, host, server or access point etc. entity suitable for such a usage.

A communications system typically comprises more than one (e/g)NodeB in which case the (e/g)NodeBs may also be configured to communicate with one another over links, wired or wireless, designed for the purpose. These links may be used for signaling purposes. The (e/g)NodeB is a computing device configured to control the radio resources of communication system it is coupled to. The NodeB may also be referred to as a base station, an access point or any other type of interfacing device including a relay station capable of operating in a wireless environment. The (e/g)NodeB includes or is coupled to transceivers. From the transceivers of the (e/g)NodeB, a connection is provided to an antenna unit that establishes bi-directional radio links to devices. The antenna unit may comprise a plurality of antennas or antenna elements. The (e/g)NodeB is further connected to the core network 120 (CN or next generation core NGC). For example, the (e/g)NodeB may connect to an access and mobility management function (AMF) and user plane function (UPF) in the control plane and user plane, respectively. Depending on the system, the counterpart on the CN side can be a serving gateway (S-GW, routing and forwarding user data packets), packet data network gateway (P-GW), for providing connectivity of devices (UEs) to external packet data networks, or mobile management entity (MME), etc.

The device (also called user device, UE, user equipment, user terminal, terminal device, etc.) illustrates one type of an apparatus to which resources on the air interface are allocated and assigned, and thus any feature described herein with a device may be implemented with a corresponding apparatus, such as a relay node. An example of such a relay node is a layer 3 relay (self-backhauling relay) towards the base station.

The device typically refers to a device (e.g. a portable or non-portable computing device) that includes wireless mobile communication devices operating with or without a subscriber identification module (SIM), including, but not limited to, the following types of devices: a mobile station (mobile phone), smartphone, personal digital assistant (PDA), handset, device using a wireless modem (alarm or measurement device, etc.), laptop and/or touch screen computer, tablet, game console, notebook, and multimedia device. It should be appreciated that a device may also be a nearly exclusive uplink only device, of which an example is a camera or video camera loading images or video clips to a network. A device may also be a device having capability to operate in loT network which is a scenario in which objects are provided with the ability to transfer data over a network without requiring human-to-human or human-to-computer interaction, e.g., to be used in smart power grids and connected vehicles. The device may also utilize cloud. In some applications, a device may comprise a user portable device with radio parts (such as a watch, earphones or eyeglasses) and the computation is carried out in the cloud. The device (or in some embodiments a layer 3 relay node) is configured to perform one or more of user equipment functionalities. The device may also be called a subscriber unit, mobile station, remote terminal, access terminal, user terminal or user equipment just to mention but a few names or apparatuses.

Various techniques described herein may also be applied to a cyber-physical system (CPS) (a system of collaborating computational elements controlling physical entities). CPS may enable the implementation and exploitation of massive amounts of interconnected ICT devices (sensors, actuators, processors microcontrollers, etc.) embedded in physical objects at different locations. Mobile cyber physical systems, in which the physical system in question has inherent mobility, are a subcategory of cyber-physical systems. Examples of mobile physical systems include mobile robotics and electronics transported by humans or animals.

Additionally, although the apparatuses have been depicted as single entities, different units, processors and/or memory units (not all illustrated in FIG. 1) may be implemented.

5G enables using MIMO antennas, many more base stations or nodes than an existing LTE system (a so-called small cell concept), including macro sites operating in cooperation with smaller stations and employing a variety of radio technologies depending on service needs, use cases and/or spectrum available. 5G mobile communications supports a wide range of use cases and related applications including video streaming, augmented reality, different ways of data sharing and various forms of machine type applications (such as (massive) machine-type communications (mMTC), including vehicular safety, different sensors and real-time control. 5G is expected to have multiple radio interfaces, namely below 6GHz, centimeter Wave (cmWave) and mmWave, and also being integrable with existing legacy radio access technologies, such as the LTE. Integration with the LTE may be implemented, at least in the early phase, as a system, where macro coverage is provided by the LTE and 5G radio interface access comes from small cells by aggregation to the LTE. In other words, 5G is planned to support both inter-RAT operability (such as LTE-5G) and inter-RI operability (inter-radio interface operability, such as below 6GHz - cmWave, below 6GHz - cmWave - mmWave). One of the concepts considered to be used in 5G networks is network slicing in which multiple independent and dedicated virtual sub-networks (network instances) may be created within the same infrastructure to run services that have different requirements on latency, reliability, throughput and mobility.

The current architecture in LTE networks is fully distributed in the radio and fully centralized in the core network. The low latency applications and services in 5G require bringing the content close to the radio which leads to local break out and multi-access edge computing (MEC). 5G enables analytics and knowledge generation to occur at the source of the data. This approach requires leveraging resources that may not be continuously connected to a network such as laptops, smartphones, tablets and sensors. MEC provides a distributed computing environment for application and service hosting. The MEC structure also has the ability to store and process content in close proximity to cellular subscribers for faster response time. Edge computing covers a wide range of technologies such as wireless sensor networks, mobile data acquisition, mobile signature analysis, cooperative distributed peer-to-peer ad hoc networking and processing also classifiable as local cloud/fog computing and grid/mesh computing, dew computing, mobile edge computing, cloudlet, distributed data storage and retrieval, autonomic self-healing networks, remote cloud services, augmented and virtual reality, data caching, IoT (massive connectivity and/or latency critical), critical communications (autonomous vehicles, traffic safety, real-time analytics, time-critical control, healthcare applications).

The communication system is also able to communicate with other networks, such as a public switched telephone network or the Internet as illustrated by the component referenced by reference numeral 122, or utilize services provided by them. The communication network may also be able to support the usage of cloud services, for example at least part of core network operations may be carried out as a cloud service (this is illustrated in FIG.1 using "cloud" 124). The communication system may also comprise a central control entity, or a like, providing facilities for networks of different operators to cooperate for example in spectrum sharing.

The technology of edge cloud may be brought into a radio access network (RAN) by utilizing network function virtualization (NFV) and software defined networking (SDN). Using the technology of edge cloud may mean access node operations to be carried out, at least partly, in a server, host or node operationally coupled to a remote radio head or base station comprising radio parts. It is also possible that node operations will be distributed among a plurality of servers, nodes or hosts. Application of cloudRAN architecture enables RAN real time functions being carried out at the RAN side (in a distributed unit (DU)) and non-real time functions being carried out in a centralized manner (in a centralized unit, CU 118).

It should also be understood that the distribution of labor between core network operations and base station operations may differ from that of the LTE or even be non-existent. Some other technology advancements probably to be used are Big Data and all-IP, which may change the way networks are being constructed and managed. 5G is being designed to support multiple hierarchies, where MEC servers can be placed between the core and the base station or nodeB (NB). It should be appreciated that MEC can be applied in 4G networks as well.

5G may also utilize satellite communication to enhance or complement the coverage of 5G service, for example by providing backhauling. Possible use cases are providing service continuity for machine-to-machine (M2M) or Internet of Things (IoT) devices or for passengers on board of vehicles, or ensuring service availability for critical communications, and future railway/maritime/aeronautical communications. Satellite communication may utilize geostationary earth orbit (GEO) satellite systems, but also low earth orbit (LEO) satellite systems, in particular mega-constellations (systems in which hundreds of (nano)satellites are deployed). Each satellite 116 in the mega-constellation may cover several satellite-enabled network entities that create on-ground cells. The on-ground cells may be created via an on-ground relay node 114 or by a gNB located on-ground or in a satellite.

It is understandable for a person skilled in the art that the depicted system is only an example of a part of a radio access system and in practice, the system may comprise a plurality of (e/g)NBs, the device may have an access to a plurality of radio cells and the system may comprise also other apparatuses, such as physical layer relay nodes or other network elements, etc. One of the (e/g)NBs may be a Home(e/g)NB (H(e/g)NBs). Additionally, in a geographical area of a radio communication system a plurality of different kinds of radio cells as well as a plurality of radio cells may be provided. Radio cells may be macro cells (or umbrella cells) which are large cells, usually having a diameter of up to tens of kilometers, or smaller cells such as micro-, femto- or picocells. The (e/g)NBs of FIG.1 may provide any kind of these cells. A cellular radio system may be implemented as a multilayer network including several kinds of cells. Typically, in multilayer networks, one access node provides one kind of a cell or cells, and thus a plurality of (e/g)NBs are required to provide such a network structure.

For fulfilling the need for improving the deployment and performance of communication systems, the concept of "plug-and-play" (e/g)NBs has been introduced. Typically, a network which is able to use "plug-and-play" (e/g)NBs, includes, in addition to H(e/g)NBs, a home nodeB gateway, or HNB-GW (not illustrated in FIG.1). A HNB-GW, which is typically installed within an operator's network, may aggregate traffic from a large number of HNBs back to a core network.

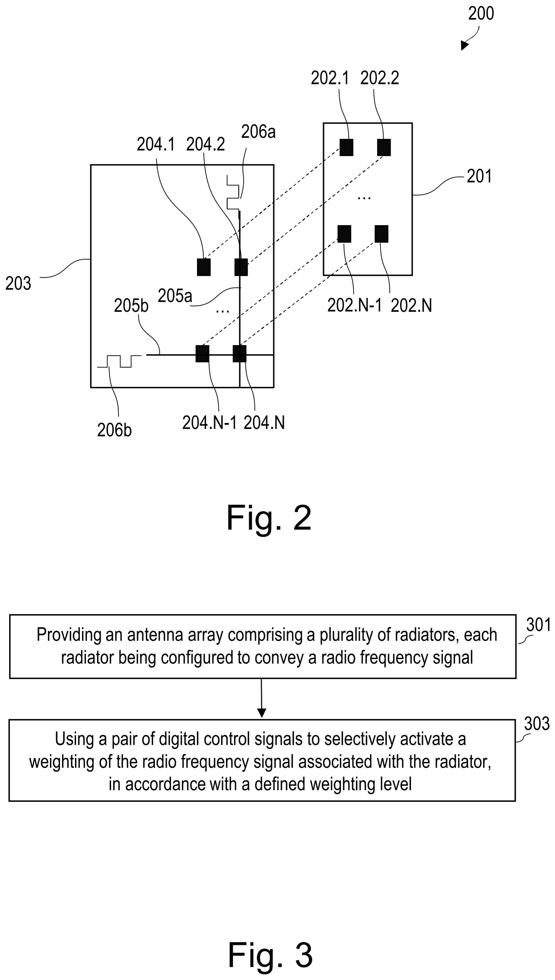

**FIG. 2** is a diagram illustrating an apparatus according to an example of the present subject matter. The apparatus may, for example, be comprised in the node 114.

The apparatus 200 comprises an antenna array 201 comprising a plurality of radiators 202.1 through 202.N. Each radiator is configured to convey a radio frequency signal. The apparatus further comprises a control system 203 comprising beamforming elements 204.1 through 204.N associated with the radiators 202.1 through 202.N respectively. The associations between the beamforming elements 204.1 through 204.N with the radiators 202.1 through 202.N is illustrated with dashed lines. The control system 203 comprises control lines (not all shown) such as the pair of control lines 205a and 205b, with each control line being configured to connect to multiple beamforming elements. The control system 203 is configured to send digital control signals 206a and 206b through a pair of the control lines 205a and 205b that connect to a specific beamforming element 204.N associated with a specific radiator 202.N to selectively activate a weighting of the radio frequency signal corresponding to the specific radiator in accordance with a defined weighting level.

**FIG. 3** is a process flowchart illustrating a method for weighting a radio frequency signal according to an example of the present subject matter.

An antenna array comprising a plurality of radiators may be provided in block 301, wherein each radiator being configured to convey a radio frequency signal. A pair of digital control signals may be used in block 303 to selectively activate a weighting of the radio frequency signal associated with the radiator, in accordance with a defined weighting level.

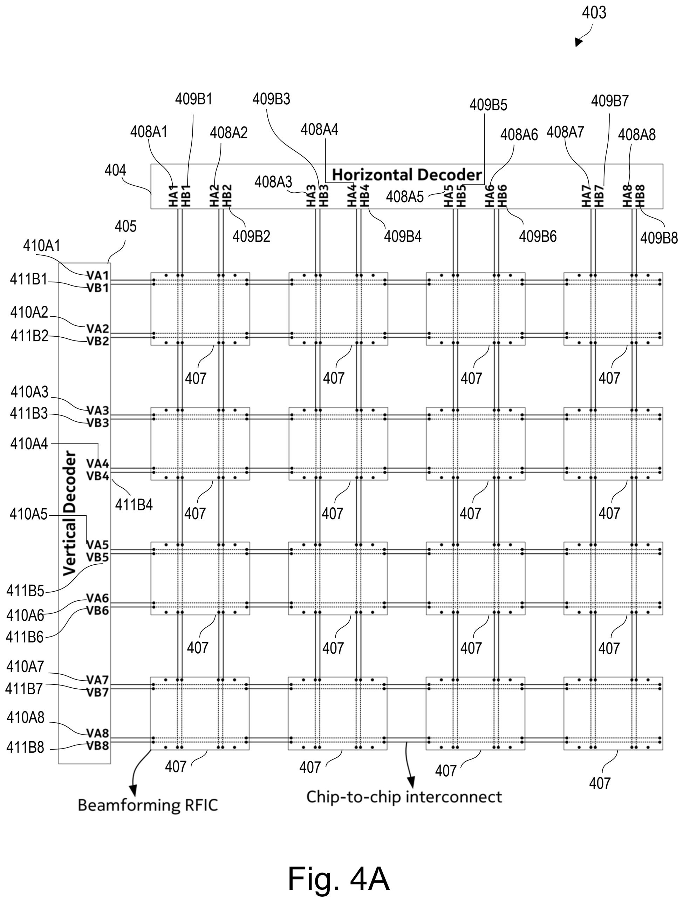

**FIG. 4A** is a diagram illustrating a control system according to an example of the present subject matter. The control system may provide an example implementation of the control system 203.

The control system 403 is implemented as a grid-based structure of the beamforming elements, where control lines are structured to activate beamforming elements at their intersections. In the diagram, the reference numerals 408A1-408A8 and 409B1-409B8 correspond to horizontal control lines (HA1-HA8 and HB1-HB8, respectively), while the reference numerals 410A1-410A8 and 411B1-411B8 correspond to vertical control lines (VA1-VA8 and VB1-VB8, respectively). These control lines intersect at specific locations in the grid-based beamforming control system 403, forming activation points for beamforming elements. The control system 403 comprises horizontal control lines 408A1 through 408A8 (HA1, HA2, ... HA8) and vertical control lines 410A1 through 410A8 (VA1, VA2, ... VA8), which define a structured grid arrangement. Each intersection of a horizontal and vertical control line corresponds to a beamforming element (not explicitly shown in the diagram). The control system 403 comprises a horizontal decoder 404, which is configured to apply digital control signals to the horizontal control lines (HA1, HA2, ... HA8), and a vertical decoder 405, which is configured to apply digital control signals to the vertical control lines (VA1, VA2, ...VA8). A beamforming element is selectively activated by a pair of control lines, one from the horizontal decoder 404 (e.g., HA1) and one from the vertical decoder 405 (e.g., VA1). For scenarios requiring multiple activations per beamforming element, at least one additional secondary pair of control lines is introduced, indexed with the letter "B." These secondary control lines 409B1 through 409B8 are denoted as HB1, HB2, ... HB8 (horizontal) and 411B1 through 411B8 denoted asVB1, VB2, ... VB8 (vertical). The intersection of these secondary control lines may allow for a second activation instance at the same beamforming element, enabling additional weighting levels such as gain adjustments or phase shifts.

The control system 403 may, for example, be provided as a beamforming circuitry with a 4x4 array of chips (each chip comprising a RFIC) 407 such that each beamforming element of the beamforming circuitry has a corresponding distinct radiator of the antenna array, which may be an 8x8 antenna array. The beamforming circuitry in FIG. 4A may, for example, be implemented on the bottom side of an RF substrate, feeding the antenna array on the top side of the substrate. The substrate material may be organic Printed Circuit Board (PCB) board, silicon, or glass. This implementation may use fused silica wafer board as the substate because it may feature low loss and enable ultra-high resolution circuit print, which may be used for mmWave circuit design.

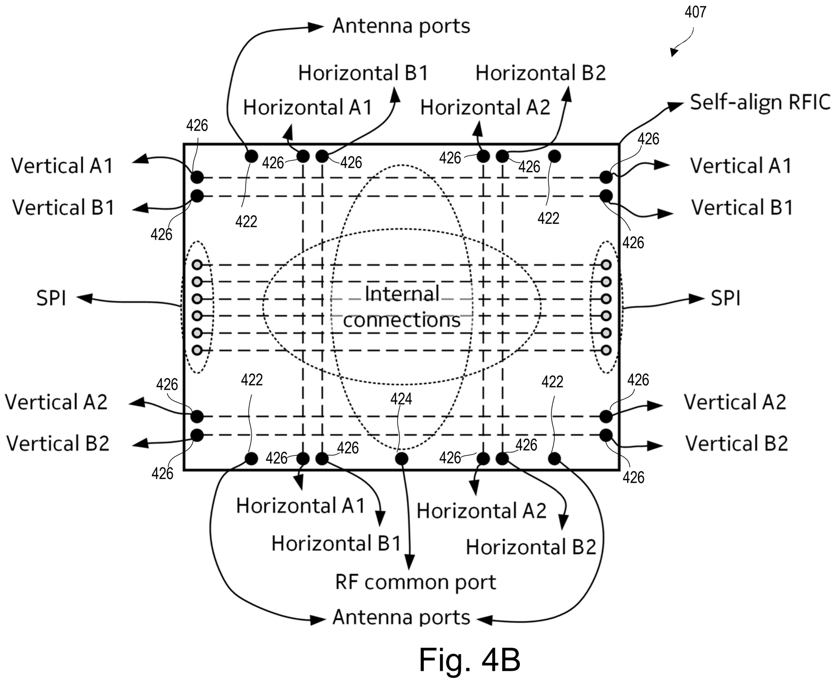

Each RFIC 407 is designed to control a subset of radiators within the antenna array. The RFICs are interconnected through control lines 408A1 through 408A8, 409B1 through 409B8, 410A1 through 410A8 and 411B1 through 411B8 which may include chip-to-chip interconnections, allowing coordinated operation for precise weighting (e.g., phase adjustments) of the radio frequency signals. As illustrated in FIG. 4B, each RFIC 407 comprises a RF common port 424, multiple antenna ports 422, and dedicated control interfaces, including digital control pins 426 associated with control lines Horizontal A1, Horizontal B1, Horizontal A2, and Horizontal B2 along the horizontal axis, and Vertical A1, Vertical B1, Vertical A2, and Vertical B2 along the vertical axis. Control interfaces may further include Serial Peripheral Interface (SPI) pins which may be arranged symmetrically and internally connected for easier array interconnect design. The antenna ports 422 may route radio frequency signals to or from corresponding radiators. The RF common port 424 may serve as a centralized RF input/output interface, distributing the radio frequency signal across the internal circuitry of the RFIC 407. The internal connections route signals between the RF common port 424 and antenna ports 422. The digital control pins 426 may be controlled by horizontal and vertical self-align decoders, which may not require a clock signal and only send digital on/off signal to each control line. The digital control pins 426 may be used to interface with each control line, both at an entry point and an exit point where the control line connects to the RFIC 407. This arrangement may ensure that digital control signals can be transmitted through the control lines to selectively activate beamforming elements within the array of RFICs. The digital control pins 426 may be dedicated to self-align control, including horizontal/vertical A/B 1/2 pins, which are used to facilitate precise beam alignment. The number of digital control pins 426 may be determined based on system requirements, allowing flexibility in implementation. For example, the digital control pins 426 on each chip 407 may be arranged symmetrically with respect to the X- and Y-axis. Digital control pins 426 on the left side may be internally connected to those on the right, and those on the top side may be internally connected to those on the bottom side. This symmetric arrangement of digital control pins 426 may offer flexibility and facilitate interconnection design in the array of RFICs, as illustrated in FIG. 4A. Unlike traditional RF switches, which may suffer from substantial loss at mmWave frequencies, particularly at E-band or higher, the digital self-align control may be executed by switching these digital control pins 426 on or off, eliminating the need for RF switches and reducing signal degradation. The digital control pins 426 may be particularly advantageous for mmWave backhaul systems, where maintaining a high-gain directional link may be advantageous, while also being applicable to beamforming circuitry in other array antenna systems. By implementing dedicated digital control pins 426, the present subject matter may enable fast and continuous self-alignment without requiring clock synchronization, significantly improving real-time beam steering performance compared to SPI-based control. Indeed, while SPI control could be used for self-alignment, it may introduce constant clock signal traffic, which can induce noise into the backhaul data link, potentially degrading signal integrity. Additionally, SPI control may only update one chip at a time, resulting in slow beam steering adjustments. Although an SPI lookup table could be used to control multiple chips simultaneously, it would require large memory resources, making it impractical for large-scale antenna arrays where efficient and low-latency beam steering is essential.

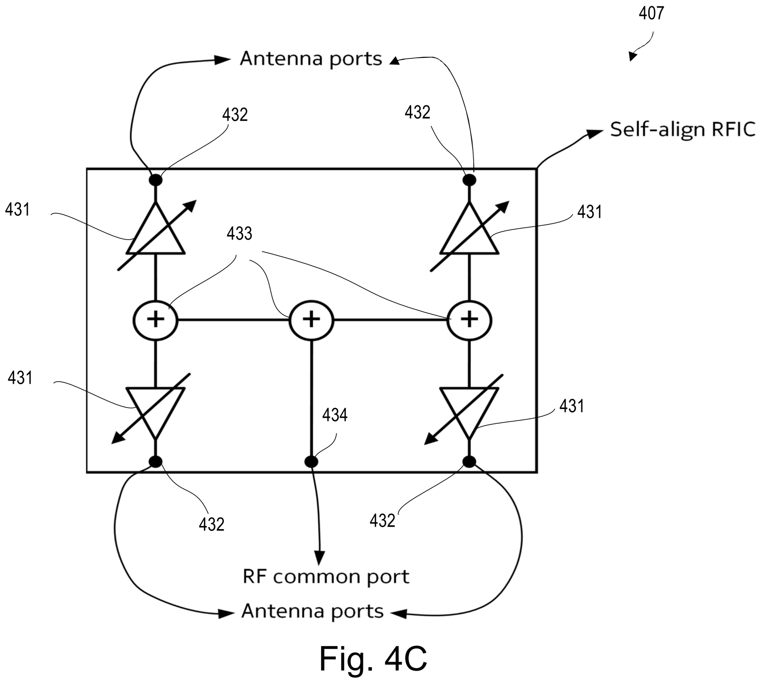

In one example, the activation of each beamforming element may correspond to enabling a power amplifier associated with a specific radiator, thereby applying a defined weighting level to the radio frequency signal, meaning the beamforming element comprises at least one power amplifier. This is illustrated in the RFIC of FIG. 4C, where multiple power amplifiers 431 are integrated to provide controlled amplification and signal distribution. The RFIC 407 includes an RF common port 434 for receiving and distributing the input radio frequency signals, which may then be routed to different antenna ports 432 via a network of interconnected power amplifiers 431 and summation nodes 433. Each antenna port 432 is associated with a corresponding power amplifier 431, ensuring that the output signal at each port can be weighted independently and routed to corresponding radiator of the antenna array.

Hence, the circuit architecture with a symmetric design, as described herein, may be scalably applied to any antenna array size while utilizing the same self-alignment algorithm. Due to the symmetric pin arrangement with internal connections, the beamforming circuit design may remain straightforward and adaptable for any rectangular array configuration, ensuring efficient implementation across various antenna system sizes.

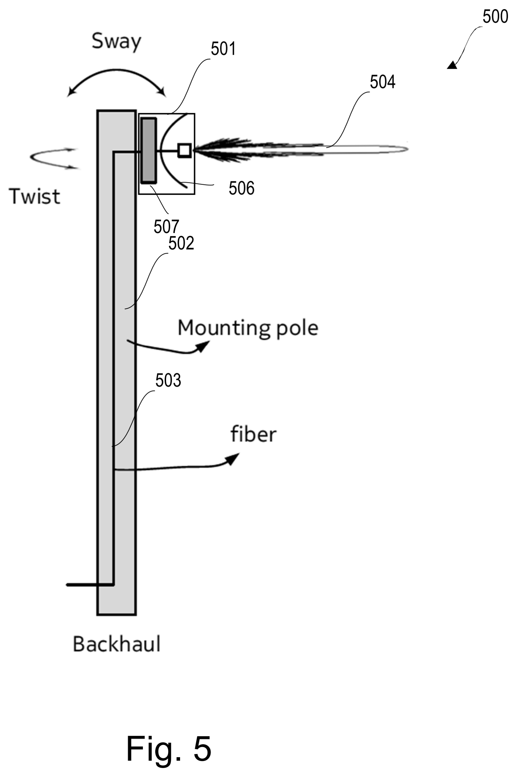

**FIG. 5** illustrates a communication device for beam forming in accordance with an example of the present subject matter.

The communication device 500 includes apparatus 501, which may serve as an example implementation of the apparatus described with reference to FIG. 2, wherein the apparatus 501 further comprises a dielectric lens 506. The apparatus 501 includes an antenna array 507 comprising multiple radiators, forming a high-gain antenna. Additionally, the apparatus 501 comprises a control system that includes beamforming elements associated with the radiators and control lines, where each control line is configured to connect to multiple beamforming elements. The apparatus 501 may further comprise a processing unit (not shown) for controlling operation of the control system. For example, the processing unit may comprise at least one processor; and at least one memory storing instructions that, when executed by the at least one processor, cause the processing unit to: detect the misalignment and generate the instruction to the control system, the instruction indicating the digital control signals to the appropriate control lines, for activating the appropriate beamforming elements to correct the misalignment.

In other example embodiments, the communication device 500 may be any electronic wireless communications device, for example, at least one of: a backhaul point-to-point link, a base station, a gNB, an access point, a repeater, a portable electronic device or a mobile electronic device.

The communication device 500 is mounted on a mounting pole 502, which provides structural support for the apparatus 501. The mounting pole 502 further includes a fiber connection 503 to the apparatus 501, facilitating the routing of radio frequency signals to and from the apparatus 501. These radio frequency signals may, for example, be generated in a separate unit (not shown) within the communication device 500. The radio frequency signals may be encoded for transmission within a frequency band such as a mmWave frequency band and thus the apparatus 501 may be referred to a mmWave radio.

This diagram illustrates the ability of apparatus 501 to form a beam 504 by selectively activating a subarray of beamforming elements. This may enable selectively applying weightings to the radio frequency signals corresponding to a specific subarray of radiators within the apparatus 501 associated with the subarray of beamforming elements. The beam 504 may have a beamforming configuration. The beamforming configuration specifies the number of beamforming elements, their arrangement as a subarray, and the number of weighting levels per beamforming element within the subarray. The beamforming configuration, in combination with the selected positions or specific radiators of the subarray within the antenna array 507, may determine the direction of the beam 504.

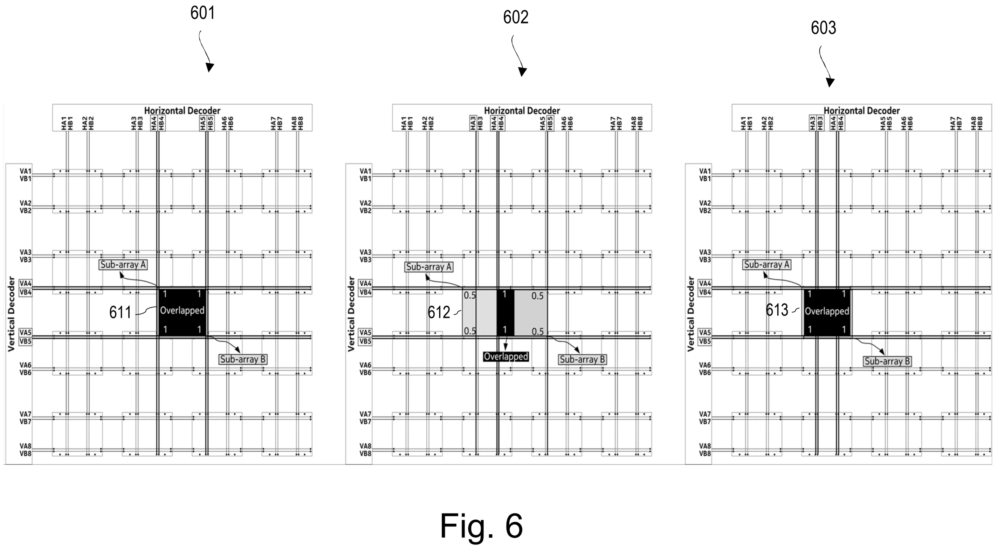

However, even a slight shift in the installed platform can significantly degrade the wireless link by causing misalignment. This misalignment may result from structural sway, twisting, and vibrations induced by wind and other environmental forces, as illustrated in FIG. 5. Additionally, the technical challenge is further intensified by the need to achieve high Effective Isotropic Radiated Power (EIRP) while maintaining low power consumption. Hence, the communication device may have to be capable of realigning the beam rapidly to compensate for any misalignments. Furthermore, to preserve signal quality, the communication device may have to mitigate noise introduced by control signals, ensuring stable and reliable operation. For that, the present subject matter may provide a beamforming process that applies specific weighting levels to ensure compliance with predefined power constraints. Additionally, a method for dynamically shifting the beam may be implemented to correct for misalignment while enabling rapid and efficient realignment. The beam shifting method according to the present subject matter is illustrated in FIG. 6, where a first beam having a first direction is progressively transitioned to a second beam having a second direction by activating and deactivating beamforming elements in a controlled manner. Specifically, FIG. 6 illustrates, by example, the status of the control system of FIG. 4A in three different stages 601 through 603 of beam shifting. The first beam 611 is illustrated with the status of the control system 601. The intermediate beam 612 represents the transitional state and is associated with the status of the control system 602. Finally, the second beam 613 is illustrated with the status of the control system 603, representing the completion of the beam shift. This indicates that the control system is configured to progressively form beams until achieving a beam having the second direction, each beam having a respective beamforming configuration, wherein the progressive forming is performed to uninterruptedly shift the first beam in space from the first direction to the second direction, ensuring that the beam in the second direction maintains the beamforming configuration of the first beam.

As illustrated in FIG. 6, the first beam 611 has a beamforming configuration that specifies four beamforming elements forming a subarray arranged as a square, with two weighting levels (two activation instances) per beamforming element within the subarray. In FIG. 6, the number 1 represents the accumulative signal weighting level, which is obtained by combining two weighting levels of 0.5 each. The second beam 613 is formed such that it retains the same beamforming configuration as the first beam 611. However, in this example, the beamforming configuration of the intermediate beam 612 differs from that of the first beam 611. Specifically, the intermediate beam 612 is formed using a subarray consisting of six beamforming elements rather than four. Within this subarray, the two beamforming elements in the overlap region each have two weighting levels, while the remaining four beamforming elements are associated with only one weighting level each.

Each beam among beams 611, 612, and 613 is formed at a time by simultaneously sending digital control signals to the pairs of control lines associated with each beamforming element of the subarray corresponding to the beam. For example, in the case of the first beam 611, two pairs of control lines per beamforming element are activated for each of the four beamforming elements that constitute the subarray. These control line pairs include HA and VA lines for the first activation instance (subarray A) and HB and VB lines for the second activation instance (subarray B). Similarly, in the intermediate beam 612, a combination of control line activations adjusts the weighting levels across the subarray, particularly in the overlap region, where some beamforming elements are activated with two weighting levels while others remain at one weighting level. This transition continues until the final beam 613 is formed, where the same beamforming configuration as the first beam 611 is reestablished in the new direction.

Since, in this example, a maximum of two weighting levels is described, the subarray associated with each of the beams 611, 612, and 613 may be illustrated as comprising one individual subarray per activation instance. These individual subarrays are labeled as subarray A and subarray B in FIG. 6. Each individual subarray A and individual subarray B corresponds to a specific activation instance, where individual subarray A represents the first activation instance and individual subarray B represents the second activation instance, with each activation instance being applied simultaneously for the beamforming elements in the respective subarray. When both individual subarrays overlap, their respective weighting levels are combined to form the accumulative signal weighting level, as shown in FIG. 6. However, this illustration can be scaled with the number of activation instances. For example, in the case of three activation instances, three individual subarrays may be involved, with each additional individual subarray contributing an additional weighting level to the accumulative signal weighting. This algorithm may allow for a flexible scalability of the beamforming process, where the number of individual subarrays corresponds to the number of weighting levels required per beamforming element. The algorithm may be referred to as self-align control algorithm.

The self-align control algorithm may utilize dual active individual subarray. FIG. 6 illustrates how the dual active individual subarray is shifted from the center to the left using the horizontal and vertical decoders. The first individual subarray, subarray A, is formed when the horizontal decoder sends 'on' signal to two neighboring HA lines, HA4 and HA5 in this case, and the vertical decoder sends 'on' signals to two neighboring VA lines. These four lines form a rectangle A. The antenna ports of RFICs overlaid by the rectangle A form the active individual sub-array A. Gains of amplifiers in the active individual subarray A are boosted to 3dB less (0.5 in linear scale) than the maximum operating gain. Another active individual subarray, subarray B, is formed by HB and VB lines in the same manner, and amplifier gains within active individual subarray B are also boosted to 3dB less than the maximum. Where active individual subarrays A and B overlap, amplifier gains are boosted to the maximum operating gain. With the first beam 611, active individual subarrays A and B are fully overlapped at the center of the subarray of the beam 611; thus, the 2x2 antennas at the center are fully turned-on (denoted as '1'). To shift the active subarray of the beam 611 to the left by one grid, HB5 line is turned off and HB3 line is turned on, while HB4 line is kept on. Then two amplifiers on column 5 back off 3dB gain (denoted as '0.5') whereas two amplifiers on column 3 is boosted to 3dB backoff state, while two on column 4 remain at full gain mode. This is a half-grid shift shown in the computer system 602. To further shift the active subarray of the intermediate beam 612 (one-grid shift), individual subarray A "chases" individual subarray B to be overlapped to obtain the second beam 613. Horizontal and vertical shifting of active sub-array can be performed in this manner.

As seen, the direction of the beam is linearly shifted from the right to the left. In another example, the fine control of the beam direction may be performed by fine tuning of amplitude ratio within the active subarray of the beam. The second beam component of the beam 612 from the rightmost is the result of a half-grid shift of active subarray from the leftmost. The intermediate beam 612 is in the middle between the first and the second beams 611 and 613 since amplitude ratio of the rightmost three columns is 0.5:1:0.5. If the amplitude ratio is changed to, e.g., 0.75:1:0.25, the beam direction of the beam 612 may be 25% closer to the second beam 613. This fine control of amplitude ratio may use more sub-arrays and control pins.

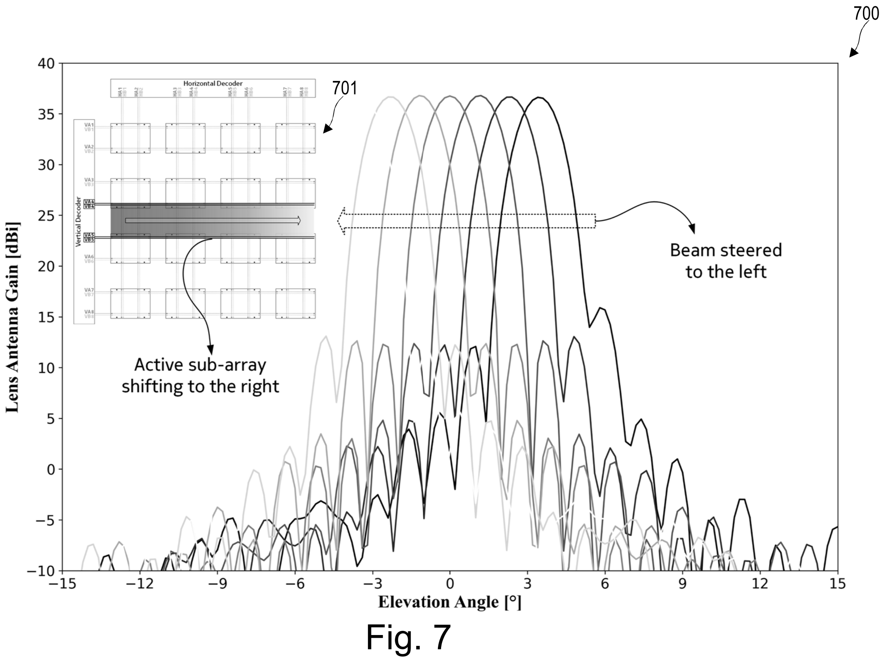

The consequence of this beam shifting may be steering the beam from the lens. **FIG. 7** shows the radiation patterns 700 of the lens when the beam in the feeder shifts from left to the right, resulting in the beam being steered to the left. The plot represents the gain (dBi) of the antenna system versus elevation angle (°), showing the beamforming response at different stages of the beam shift. The curves indicate beam patterns corresponding to different positions of the active subarray, representing the beam, within the antenna array. The embedded sub-diagram 701 provides a visual representation of the control system, highlighting how the activation of different subarrays influences the radiation pattern. The gain null between beams with the 0.5 scale amplitude control may be negligible as shown in FIG. 7. This indicates that the self-align algorithm with a maximum of two weighting levels per beamforming element is sufficient.

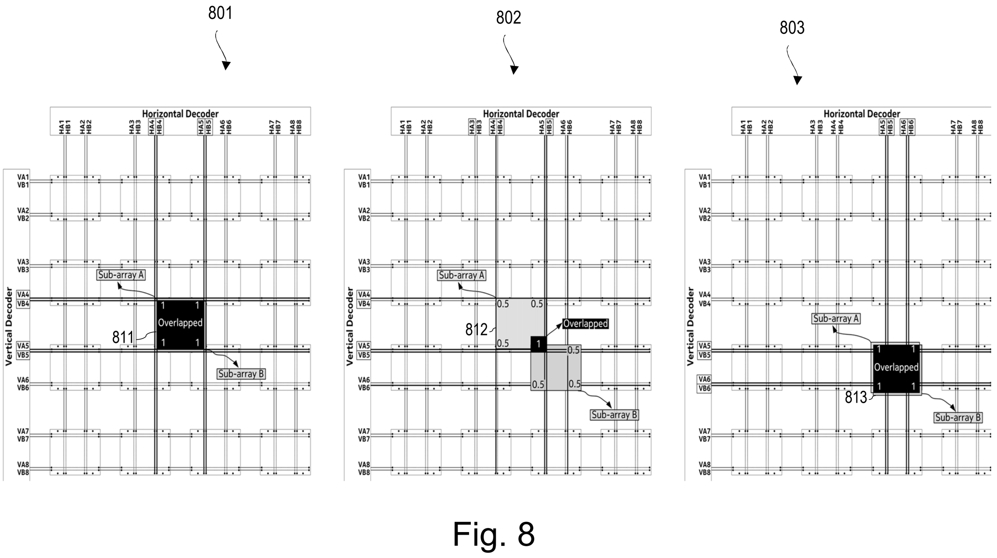

The dual active sub-array algorithm supports not only rectilinear, but also diagonal beam steering. **FIG. 8** illustrates, by example, the status of the control system of FIG. 4A in three different stages 801 through 803 of beam shifting. Specifically, FIG. 8 Illustrates how the beam may be diagonally shifted from the center as indicated with beams 811, 812 and 813. Starting from VA/VB/HA/HB 4 and 5 lines for the first beam 811, VB/HB 6 lines are turned on and VB/HB 4 lines are turned off for the intermediate beam 812. This moves active individual subarray B to the bottom right side. Then active individual subarray A may follow individual subarray B. Since the subarray grid distance in the diagonal direction is larger than the rectilinear one by a factor of the square root of 2, the beam-to-beam distance is farther by the same factor. Additionally, the total radiated power (TRP) from the beamforming circuit may always be maintained constant (4 in this implementation) whether two active individual sub-arrays are overlapped or half-grid shifted in any direction.

## Claims

1. An apparatus comprising:
an antenna array comprising a plurality of radiators, each radiator being configured to convey a radio frequency signal; and a control system comprising beamforming elements associated with the radiators and control lines, each control line being configured to connect to multiple beamforming elements;
the control system being configured to send digital control signals through a pair of the control lines that connect to a specific beamforming element associated with a specific radiator to selectively activate a weighting of the radio frequency signal corresponding to the specific radiator in accordance with a defined weighting level.

2. The apparatus of claim 1, the control system being configured to:
send further digital control signals through a distinct pair of the control lines that connect to the specific beamforming element to selectively activate a weighting of the radio frequency signal corresponding to the specific radiator in accordance with another defined weighting level such that the weighting levels are combined to produce an accumulative signal weighting.

3. The apparatus of any of the preceding claims, the beamforming elements being power amplifiers, the control system comprising a beamforming circuitry with one power amplifier per radiator, wherein the control system is configured to send the digital control signals to simultaneously switch and activate a specific gain level of the power amplifier, wherein the weighting level of the radio frequency signal is determined by the gain level of the power amplifier.

4. The apparatus of claim 3, the control system comprising a first decoder and a second decoder, wherein the first decoder is configured to apply a first digital control signal to a first control line of the pair of control lines associated with the specific radiator and the second decoder is configured to simultaneously apply a second digital control signal of the pair of control lines to a second control line of the pair of control lines, for selectively activating the power amplifier corresponding to the radiator.

5. The apparatus of any of the preceding claims, the control system being configured to:
define a beam of radio frequency signals having a beamforming configuration, wherein the beamforming configuration specifies the number of beamforming elements, their arrangement as a subarray, and the number of weighting levels per beamforming element within the subarray; and
form the beam by using for each beamforming element in the subarray: one or more pairs of the control lines, that connect to the beamforming element associated with the radiator, to activate the weighting of the corresponding radio frequency signal in accordance with the corresponding number of weighting levels.

6. The apparatus of any of the preceding claims, the control system being configured to shift a first beam having a first direction to a second direction by at least:
progressively forming beams until achieving a beam having the second direction, each beam having a respective beamforming configuration, wherein the progressive forming is performed to uninterruptedly shift the first beam in space from the first direction to the second direction, ensuring that the beam in the second direction maintains the beamforming configuration of the first beam.

7. The apparatus of claim 6, wherein the beam shift is performed such that a drop in power between adjacent beams is smaller than a threshold.

8. The apparatus of any of the preceding claims 6 to 7, the control system being configured to perform the beam shift in accordance with a predefined algorithm.

9. The apparatus of any of the preceding claims 6 to 8, wherein the second direction is a target direction, and the first direction corresponds to a misalignment with respect to the target direction.

10. The apparatus of any of the preceding claims 6 to 9, the plurality of radiators being arranged in a grid structure, the beamforming elements being arranged in accordance with the grid structure, wherein the beam shift is performed such that the subarrays associated with the formed beams follow a trajectory in the grid structure horizontally, vertically, and/or diagonally to achieve the second direction.

11. The apparatus of any of the preceding claims 6 to 10, wherein the beam is formed such that its power remains within predefined power constraints.

12. The apparatus of any of the preceding claims 6 to 11, wherein the second direction is a target direction, and the first direction corresponds to a misalignment with respect to the target direction, wherein the apparatus is configured to detect the misalignment.

13. The apparatus of any of the preceding claims, further comprising a dielectric lens configured to focus beams provided to or by the antenna array.

14. A communication device comprising the apparatus of any preceding claim.

15. A method comprising:
providing an antenna array comprising a plurality of radiators, each radiator being configured to convey a radio frequency signal; and using a pair of digital control signals to selectively activate a weighting of the radio frequency signal associated with the radiator, in accordance with a defined weighting level.
